# EUROPÄISCHE PATENTSCHRIFT

(11) **EP 2 002 185 B1**
(45) Veröffentlichungstag und Bekanntmachung des Hinweises auf die Patenterteilung: **10.08.2016**
(21) Anmeldenummer: 07712483.2
(22) Anmeldetag: 08.03.2007
(51) Int. Cl.: F23R 3/36, F23L 7/00

(54) **BRENNSTOFFLANZE FÜR EINE GASTURBINENANLAGE SOWIE EIN VERFAHREN ZUM BETRIEB EINER BRENNSTOFFLANZE**
FUEL LANCE FOR A GAS TURBINE PLANT AND A METHOD OF OPERATING A FUEL LANCE
LANCE À COMBUSTIBLE POUR INSTALLATION DE TURBINE À GAZ ET PROCÉDÉ D'UTILISATION D'UNE LANCE À COMBUSTIBLE

(30) Priorität: 31.03.2006 CH 533062006
(43) Veröffentlichungstag der Anmeldung: 17.12.2008
(73) Patentinhaber: ALSTOM Technology Ltd, 5400 Baden (CH)
(72) Erfinder: EROGLU, Adnan, CH-5417 Untersiggenthal (CH); GÜTHE, Felix, CH-4056 Basel (CH); BENZ, Urs, CH-5073 Gipf-Oberfrick (CH)
(74) Vertreter: Bernotti, Andrea
(86) Internationale Anmeldenummer: PCT/EP2007/052173
(87) Internationale Veröffentlichungsnummer: WO 2007/113074

(56) Entgegenhaltungen:
- EP-A1- 1 243 854
- EP-A2- 0 718 561
- DE-A1- 19 905 995
- FR-A- 2 328 921
- FR-A- 2 461 816
- FR-A1- 2 570 473
- GB-A- 2 176 274
- US-A- 5 615 555

## Beschreibung

### TECHNISCHES GEBIET

Die vorliegende Erfindung bezieht sich auf das Gebiet der Technik von Gasturbinenanlagen. Sie betrifft eine Brennstofflanze für eine Gasturbinenanlage sowie ein Verfahren zum Betrieb einer solchen Brennstofflanze.

### STAND DER TECHNIK

Kombikraftwerke mit integrierter Vergasung (Integrated Gasification Combined Cycle IGCC) werden normalerweise mit einem synthetischen Brenngas (Syngas oder MBtu-Gas) betrieben, das durch Vergasung von Kohle, Biomasse oder anderen Brennstoffen erzeugt wird. Dieser Brennstoff unterscheidet sich erheblich von Erdgas hinsichtlich des Brennwerts, der Dichte und der Brenneigenschaften wie z.B. Flammengeschwindigkeit und Zündverzögerungszeit. In einer Gasturbine mit sequentieller Verbrennung bzw. Zwischenüberhitzung für IGCC-Kraftwerke sind daher sowohl in Brennstoffversorgungssystem als auch in den Brennkammern wesentliche Anpassungen notwendig, um mit diesen Unterschieden fertig zu werden.

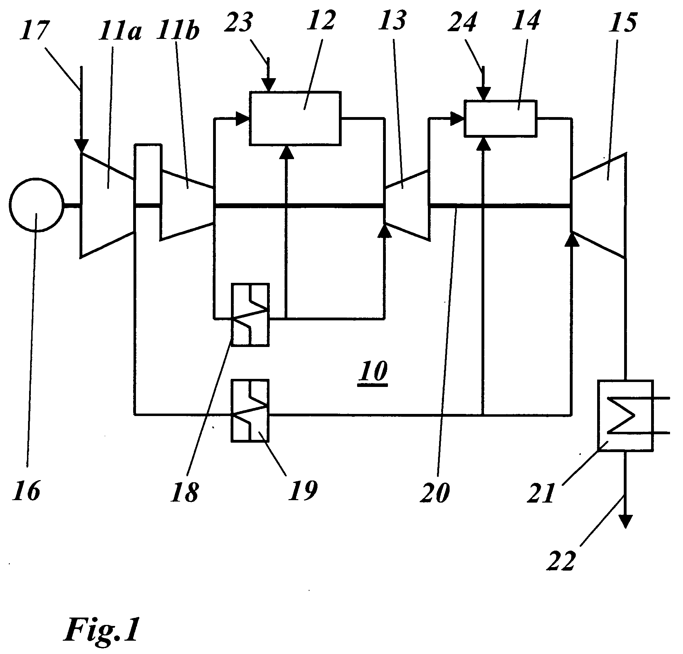

Eine Gasturbinenanlage mit Zwischenüberhitzung mit ihren wesentlichen Bestandteilen ist in Fig. 1 schematisch wiedergegeben. Die Gasturbinenanlage 10 der Fig. 1 umfasst eine Einrichtung zum Verdichten der angesaugten Verbrennungsluft, der sich aus einem Niederdruck-Verdichter 11a und einem nachgeschalteten Hochdruck-Verdichter 11 b zusammensetzt. Die verdichtete Verbrennungsluft wird zu einer ersten Brennkammer 12, wo sie teilweise zur Verbrennung eines über eine erste Brennstoffzufuhr 23 zugeführten Brennstoffs verwendet wird. Das entstehende Heissgas wird in einer nachfolgenden Hochdruck-Turbine 13 unter Arbeitsleistung entspannt und anschliessend einer zweiten Brennkammer 14 zugeführt, in welcher der unverbrauchte Luftanteil zur Verbrennung eines über eine zweite Brennstoffzufuhr 23 zugeführten Brennstoffs eingesetzt wird. Das aus der zweiten Brennkammer 14 kommende Heissgas wird in einer nachfolgenden Niederdruck-Turbine 15 unter Arbeitsleistung entspannt und dann durch einen Abhitzedampferzeuger (Heat Recovery Steam Generator HRSG) 21 geleitet, wo Dampf für (nicht dargestellte) Dampfturbinen eines separaten Wasser-Dampf-Kreislaufs erzeugt wird. Das Abgas 22 kann dann einem Kamin zugeleitet werden. Die beiden Turbinen 13 und 15 sind über eine Welle 20 mit den Verdichtern 11 a,b und einem Generator 16 für elektrische Energie verbunden und treiben diese an. Aus den Verdichtern 11a und 11b kann zu Kühlzwecken verdichtete Luft abgezweigt, in entsprechenden Hochdruck- bzw. Niederdruck-Zwangsdurchlaufkühlern (OTC) 18 bzw. 19 heruntergekühlt und anschliessend zur Kühlung zu den Brennkammern 23, 24 bzw. Turbinen 13, 15 geleitet werden. Eine vergleichbare Gasturbinenanlage ist beispielsweise in der US-A-5,617,718 offenbart.

In der zweiten Brennkammer der sequentiellen Verbrennung wird der Brennstoff mittels einer Brennstofflanze in den Heissgasstrom eingedüst, deren Form in der Fig. 2 der US-A-5,617,718 angedeutet ist, und deren Aufbau beispielsweise in der EP-A2-0 638 769 detailliert dargestellt ist. Wenn man verschiedene Arten von Syngas mit Erdgas vergleicht, stellt sich heraus, dass für das Syngas je nach Art und Herkunft ein grösserer Strömungsquerschnitt benötigt wird, der um den Faktor 3 bis 9 grösser sein kann als der Strömungsquerschnitt für Erdgas. Gegenwärtig ist es eine grosse Herausforderung, die damit verbundenen grossen Volumenströme bei Syngas durch die Brennstofflanze in die Brennkammer einzudüsen. Theoretisch ist es möglich, den Lanzendurchmesser zu vergrössern, um den benötigten zusätzlichen Raum zu schaffen. Diese würde jedoch einen erheblichen Einfluss auf die Aerodynamik des Brenners haben und eine Neukonstruktion der Brennkammer und des Gehäuses der Gasturbine nach sich ziehen. Es ist daher wünschenswert, den Aussendurchmesser der Brennstofflanze beim Übergang von Erdgas zu Syngas konstant zu halten. Andererseits sind einige Veränderungen notwendig, um die Verweilzeit des Syngases innerhalb der Mischzone des Brenners zu verringern und so eine Rückzündung zu vermeiden.

Aus der Druckschrift US-A-5,615,555 ist eine für zwei Brennstoffe vorgesehene Eindüsungsvorrichtung für die Brennkammer einer Gasturbine bekannt, bei der eine zentrale Düse für flüssigen Brennstoff konzentrisch von einer Düsenanordnung für einen gasförmigen Brennstoff und aussen von einer ersten Vorrichtung zur Erzeugung eines Mantelstroms aus Verbrennungsluft umgeben ist. Die Düsenanordnung für den gasförmigen Brennstoff umfasst ihrerseits einen innenliegenden Ring aus schräg nach aussen orientierten Öffnungen, der von einer zweiten Vorrichtung zur Erzeugung eines Mantelstroms aus dem gasförmigen Brennstoff umgeben ist.

Brennstofflanzen sind auch aus den Dokumenten FR 2 570 473 A, DE 199 05 995 A1 und EP 0 718 561 A2 bekannt. In der DE 199 05 995 A1 ist eine Brennstofflanze offenbart, die einen sich in Strömungsrichtung eines Heissgases erstreckenden Lanzenteil aufweist, der wenigstens ein konzentrisch zu einer Lanzenachse angeordnetes Aussenrohr und ein konzentrisch im Aussenrohr angeordnetes Zwischenrohr umfasst, in welchem der Brennstoff zu einer Lanzenspitze geführt und dort durch Eindüsungsöffnungen in das Heissgas eingedüst wird, wobei diese Eindüsungsöffnungen so orientiert sind, dass die aus ihnen austretenden Brennstoffstrahlen mit der Lanzenachse einen Winkel einschliessen.

### DARSTELLUNG DER ERFINDUNG

Es ist Aufgabe der Erfindung, eine Brennstofflanze und ein Verfahren zu deren Betrieb anzugeben, welche ohne wesentliche Änderungen in den Aussenabmessungen den Einsatz von Syngas als Brennstoff in der zweiten Verbrennungsstufe einer Gasturbine mit sequentieller Verbrennung ermöglichen.

Die Aufgabe wird durch die Gesamtheit der Merkmale der Ansprüche 1, 6 und 10 gelöst. Für die erfindungsgemässe Lösung ist wesentlich, dass die ersten Eindüsungsöffnungen unmittelbar an der Lanzenspitze angeordnet sind, und dass die ersten Eindüsungsöffnungen so orientiert sind, dass die aus ihnen heraustretenden Brennstoffstrahlen mit der Lanzenachse einen spitzen Winkel einschliessen, dass die Lanzenspitze abgerundet ist, und die ersten Eindüsungsöffnungen im Bereich der Rundung angeordnet sind, wobei das konzentrisch im Aussenrohr angeordnete Zwischenrohr in einem Abstand von der Lanzenspitze endet und am Ende eine Öffnung aufweist, die der Weite des Rohres entspricht.

Auf diese Weise kann ein Medium, welches im Zwischenrohr oder im Zwischenraum zwischen Aussenrohr und Zwischenrohr herangeführt wird, ohne Probleme durch diese Eindüsungsöffnungen in den Heissgasstrom eingedüst werden.

Durch die Verschiebung der Eindüsungsöffnungen in Strömungsrichtung des Heissgases zur Spitze der Lanze und durch die Schrägstellung / das Kippen der eingedüsten Brennstoffstrahlen in Strömungsrichtung wird die Verweilzeit des Syngases in der Mischzone reduziert. Der (spitze) Winkel, den die Strahlen mit der Lanzenachse einschliessen, ist ein Parameter, der in Abhängigkeit von Wasserstoffgehalt des Brennstoffs optimiert werden kann, wobei der Winkel umso kleiner wird, je höher der Wasserstoffanteil ist.

Eine Ausgestaltung zeichnet sich dadurch aus, dass in dem Zwischenrohr konzentrisch ein Innenrohr angeordnet ist, dass das Innenrohr zur Lanzenspitze geführt ist, und dass an der Lanzenspitze zweite Eindüsungsöffnungen zur Eindüsung von flüssigem Brennstoff vorgesehen sind, welche durch das Innenrohr mit dem flüssigen Brennstoff versorgt werden.

Vorzugsweise sind die ersten und zweiten Eindüsungsöffnungen jeweils auf einem gemeinsamen Radius um die Lanzenachse angeordnet sind, wobei der Radius der zweiten Eindüsungsöffnungen kleiner ist als der Radius der ersten Eindüsungsöffnungen.

Die zweiten Eindüsungsöffnungen können dabei zur Erzeugung eines Brennstoffstrahls ausgelegt sein. Sie können aber auch zur Erzeugung eines Sprühnebels ausgelegt sein.

Beim erfindungsgemässen Verfahren zum Betrieb einer Brennstofflanze ohne Innenrohr wird im Zwischenrohr als Brennstoff Syngas zu den ersten Eindüsungsöffnungen geführt und durch die ersten Eindüsungsöffnungen in den Heissgasstrom eingedüst.

Eine Ausgestaltung des erfindungsgemässen Verfahrens ist dadurch gekennzeichnet, dass im Zwischenraum zwischen Aussenrohr und Zwischenrohr ebenfalls als Brennstoff Syngas zu den ersten Eindüsungsöffnungen geführt und durch die ersten Eindüsungsöffnungen in den Heissgasstrom eingedüst wird.

Eine andere Ausgestaltung zeichnet sich dadurch aus, dass im Zwischenraum zwischen Aussenrohr und dem Zwischenrohr ein Verdünnungsmedium, insbesondere Stickstoff oder Dampf, zu den ersten Eindüsungsöffnungen geführt und durch die ersten Eindüsungsöffnungen in den Heissgasstrom eingedüst wird.

Eine weitere Ausgestaltung ist dadurch gekennzeichnet, dass im Zwischenraum zwischen Aussenrohr und dem Zwischenrohr Luft als Träger oder Abschirmmedium zu den ersten Eindüsungsöffnungen geführt und durch die ersten Eindüsungsöffnungen in den Heissgasstrom eingedüst wird.

Beim erfindungsgemässen Verfahren zum Betrieb einer Brennstofflanze mit Innenrohr wird im Zwischenraum zwischen Zwischenrohr und Innenrohr als Brennstoff Syngas zu den ersten Eindüsungsöffnungen geführt und durch die ersten Eindüsungsöffnungen in den Heissgasstrom eingedüst, und es wird im Innenrohr ein flüssiger Brennstoff, insbesondere Öl, zu den zweiten Eindüsungsöffnungen geführt und durch die zweiten Eindüsungsöffnungen in den Heissgasstrom eingedüst.

Eine Ausgestaltung dieses erfindungsgemässen Verfahrens ist dadurch gekennzeichnet, dass im Zwischenraum zwischen Aussenrohr und Zwischenrohr ebenfalls als Brennstoff Syngas zu den ersten Eindüsungsöffnungen geführt und durch die ersten Eindüsungsöffnungen in den Heissgasstrom eingedüst wird.

Es ist aber auch denkbar, dass im Zwischenraum zwischen Aussenrohr und dem Zwischenrohr ein Verdünnungsmedium, insbesondere Stickstoff oder Dampf, zu den ersten Eindüsungsöffnungen geführt und durch die ersten Eindüsungsöffnungen in den Heissgasstrom eingedüst wird.

Weiterhin kann es von Vorteil sein, wenn im Zwischenraum zwischen Aussenrohr und dem Zwischenrohr Luft als Träger oder Abschirmmedium zu den ersten Eindüsungsöffnungen geführt und durch die ersten Eindüsungsöffnungen in den Heissgasstrom eingedüst wird.

Es ist aber auch denkbar, dass im Zwischenraum zwischen Zwischenrohr und Innenrohr als Brennstoff ein Mischgas aus Erdgas und Dampf oder Stickstoff zu den ersten Eindüsungsöffnungen geführt und durch die ersten Eindüsungsöffnungen in den Heissgasstrom eingedüst wird, und dass im Innenrohr ein flüssiger Brennstoff, insbesondere Öl, zu den zweiten Eindüsungsöffnungen geführt und durch die zweiten Eindüsungsöffnungen in den Heissgasstrom eingedüst wird.

Insbesondere kann im Zwischenraum zwischen Aussenrohr und dem Zwischenrohr Luft als Träger zu den ersten Eindüsungsöffnungen geführt und durch die ersten Eindüsungsöffnungen in den Heissgasstrom eingedüst werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein vereinfachtes Schema einer Gasturbinenanlage mit sequentieller Verbrennung, wie sie aus dem Stand der Technik bekannt und zur Realisierung der Erfindung geeignet ist;
- Fig. 2 und 3: ein erstes Ausführungsbeispiel einer Brennerlanze nach der Erfindung für den Betrieb mit Syngas in der zweiten Verbrennungsstufe einer Gasturbinenanlage nach Fig. 1, wobei in Fig. 2 ausschliesslich Syngas eingedüst wird;
- Fig. 4 bis 6: ein zweites Ausführungsbeispiel einer Brennerlanze nach der Erfindung für den Einsatz in der zweiten Verbrennungsstufe einer Gasturbinenanlage nach Fig. 1, wobei ausserhalb des Innenrohres unterschiedliche Medien geführt und eingedüst werden.

### WEGE ZUR AUSFÜHRUNG DER ERFINDUNG

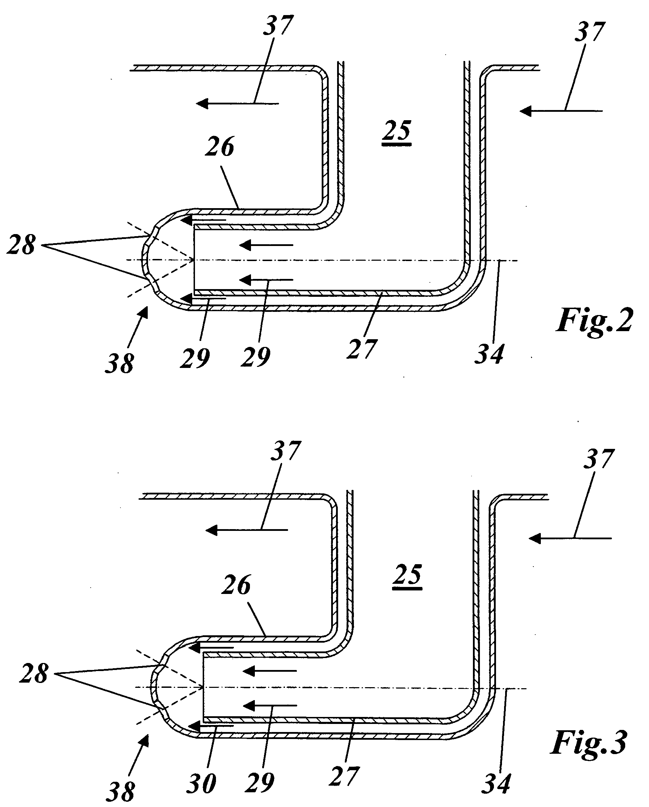

In Fig. 1 und 2 ist ein erstes Ausführungsbeispiel einer Brennstofflanze nach der Erfindung wiedergegeben, wobei in den beiden Figuren unterschiedliche Betriebsweisen dargestellt sind. Die Brennstofflanze 25 der Fig. 1 und 2 ragt zunächst senkrecht in die Strömung des Heissgases 37 hinein, biegt dann rechtwinklig ab und erstreckt sich in Strömungsrichtung des Heissgases 37 entlang einer Lanzenachse 34, die parallel zur Heissgasströmung liegt. Die Brennstofflanze 25 umfasst ein Aussenrohr 26, in dem konzentrisch ein Zwischenrohr 27 angeordnet ist. Das Aussenrohr 26 ist bis zur Lanzenspitze 38 gezogen und endet dort mit einem abgerundeten Endbereich, in dem vergleichsweise grosse Eindüsungsöffnungen 28 um die Lanzenachse 34 herum mit radialem Abstand verteilt angeordnet sind. Das Zwischenrohr 27 endet bereits vor der Lanzenspitze 38 mit einer Öffnung, die der Weite des Rohres entspricht. Auf diese Weise kann eine Medium, welches im Zwischenrohr 27 oder im Zwischenraum zwischen Aussenrohr 26 und Zwischenrohr 27 herangeführt wird, ohne Probleme durch die Eindüsungsöffnungen 28 in den Heissgasstrom eingedüst werden.

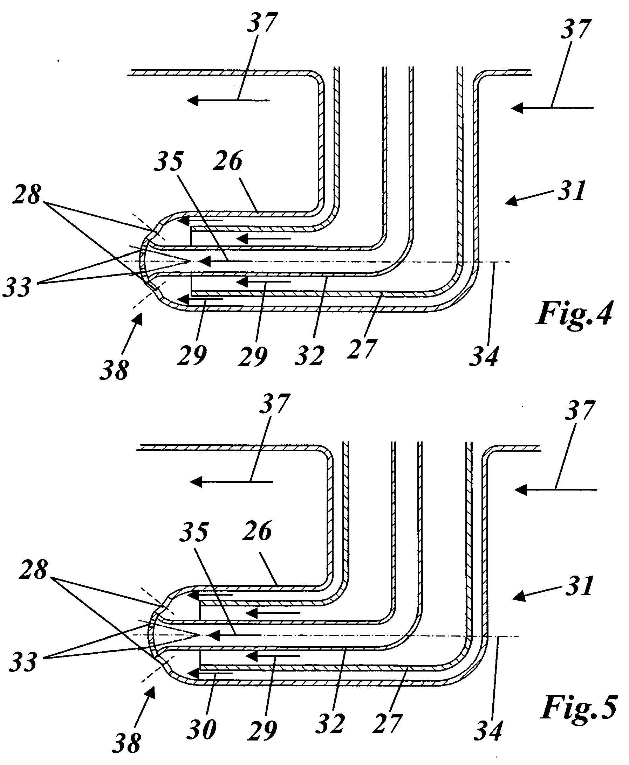

Gemäss Fig. 2 wird in einer besonders einfachen Ausgestaltung der Erfindung der gesamte Raum im Inneren der Brennstofflanze 25 zum Heranführen von Syngas 29 ausgenutzt. Ein Innenrohr, das - wie in den Fig. 4-6 gezeigt - für einen flüssigen Brennstoff genutzt wird, ist vollständig entfernt. Ebenso wird der Zwischenraum zwischen Aussenrohr 26 und Zwischenrohr 27, der sonst zur Führung von Luft verwendet wird, auch für den Transport von Syngas eingesetzt. Die Eindüsungsöffnungen sind gegenüber der bekannten Lösung aus der EP-A2-0 638 769 stromabwärts verschoben und mit ihrer Strahlrichtung (gestrichelte Linien in Fig. 2, 3) aus der radialen Richtung hin zur axialen Richtung geneigt bzw. verkippt, um die Verweilzeit des Syngases in der Mischzone zu verringern. Der (spitze) Winkel, den die Strahlen mit der Lanzenachse 34 einschliessen, ist ein Parameter, der in Abhängigkeit von Wasserstoffgehalt des Brennstoffs optimiert werden kann, wobei der Winkel umso kleiner wird, je höher der Wasserstoffanteil ist.

Es ergeben sich dadurch die folgenden Vorteile:
- Es steht der maximale Strömungsquerschnitt für das Syngas zur Verfügung; und
- für die Gaseindüsung ergibt sich ein minimierter Druckabfall;
Der Betrieb ist allerdings auf den einen Brennstoff, nämlich Syngas, beschränkt.

In Abwandlung des in Fig. 2 dargestellten Betriebsmodus der Zwischenraum zwischen dem Aussenrohr 26 und dem Zwischenrohr 27 dazu benutzt werden, ein Verdünnungsmedium in Form von Stickstoff oder Dampf zuzuführen. Alternativ dazu kann gemäss Fig. 3 der Zwischenraum der Zuführung von Luft 30 als Träger oder Abschirmstrom vorbehalten werden. Sowohl die Verdünnung als auch die Abschirmung helfen dabei, das Verbrennungsverhalten zu verbessern, indem vor der Zündung eine bessere Durchmischung erreicht wird, so das die NOx-Emissionen und das Risiko eines Flammenrückschlags reduziert werden.

Es ist aber auch denkbar, gemäss Fig. 4 eine Brennerlanze 31 einzusetzen, bei der im Inneren des Zwischenrohres 27 konzentrisch ein Innenrohr 32 angeordnet ist, durch welches flüssiger Brennstoff in Form von Öl 35 in die Lanzenspitze 38 geführt und dort durch separate Eindüsungsöffnungen 33 eingedüst wird. Die Öleindüsung erfolgt im Zentrum der Lanzenspitze 38. Gemäss Fig. 4 wird in den Zwischenräumen zwischen Aussenrohr 26 und Zwischenrohr 27 und zwischen Zwischenrohr 27 und Innenrohr 32 Syngas geführt. Gemäss Fig. 5 wird der Zwischenraum zwischen Aussenrohr 26 und Zwischenrohr 27 dazu benutzt, entweder ein Verdünnungsmedium (Dampf oder Stickstoff) zu transportieren, oder - wie in Fig. 5 eingezeichnet - Luft 30 als Träger oder Abschirmstrom. Die Eindüsungsöffnungen 33 für das Öl 35 können entweder zur Erzeugung von Brennstoffstrahlen oder eines Sprühnebels ausgebildet sein. Obgleich durch die Einführung des Innenrohres 32 der Platz für das Syngas leicht eingeschränkt wird, ergibt sich so die Möglichkeit, Zusatz-Brennstoff (back-up fuel) einzusetzen.

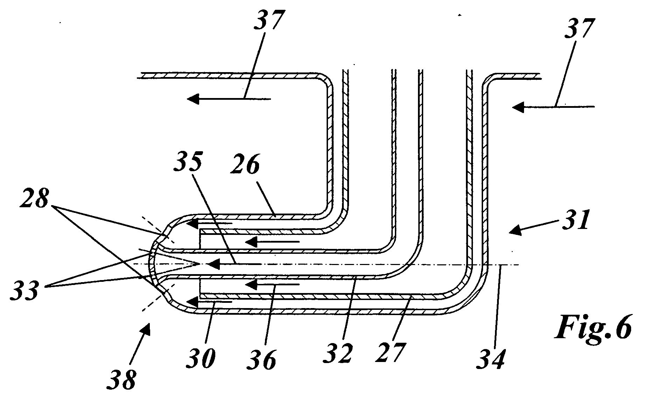

Schliesslich ist es auch denkbar, anstelle des Syngas mit der Brennstofflanze gemäss Fig. 4-5 Erdgas zu verwenden. Da wegen der grossen Eindüsungsöffnungen 28 die damit erreichbare Strömungsgeschwindigkeit für Erdgas an sich zu klein ist, kann eine Betrieb mit Erdgas dadurch ermöglicht werden, dass durch Verdünnung des Erdgases mit Dampf oder Stickstoff ein Mischgas 36 erzeugt und anstelle des Syngas eingedüst wird (Fig. 6). Auf diese Weise kann die Eindüsungsgeschwindigkeit des Erdgases erhöht werden, um eine bessere Durchdringung und Mischung zu erreichen. Darüber hinaus verlangsamt der Zusatz von Verdünnungsmedien wie Dampf oder Stickstoff die Verbrennungschemie, und verhilft so zu einer besseren Mischung von Brennstoff und Luft, und damit zu einem verbesserten Emissionsverhalten.

Insgesamt ergeben sich mit der Erfindung die folgenden Vorteile:
- Eine einfache und im Retrofit realisierbare Lösung zur Syngasverwendung bei einer sequentiellen Verbrennung in einer Gasturbine;
- einen maximalen Strömungsquerschnitt und minimalen Druckabfall, wenn auf das Innenrohr verzichtet wird; und
- eine optimale Möglichkeit für Zusatzbrennstoffe (back-up fuel).

### BEZUGSZEICHENLISTE

- 10: Gasturbinenanlage
- 11 a: Niederdruck-Verdichter
- 11 b: Hochdruck-Verdichter
- 12,14: Brennkammer
- 13: Hochdruck-Turbine
- 15: Niederdruck-Turbine
- 16: Generator
- 17: Lufteinlass
- 18: Hochdruck-Zwangsdurchlaufkühler
- 19: Niederdruck-Zwangsdurchlaufkühler
- 20: Welle
- 21: Abhitzedampferzeuger
- 22: Abgas
- 23,24: Brennstoffzufuhr
- 25,31: Brennstofflanze
- 26: Aussenrohr
- 27: Zwischenrohr
- 28,33: Eindüsungsöffnung
- 29: Syngas
- 30: Luft
- 32: Innenrohr
- 34: Lanzenachse
- 35: Öl
- 36: Mischgas
- 37: Heissgas
- 38: Lanzenspitze

## Patentansprüche

1. Brennstofflanze (25, 31) für eine Gasturbinenanlage (10) mit sequentieller Verbrennung, bei der in einer ersten Brennkammer (12) Heissgas (37) erzeugt und in einer nachfolgenden Turbine (13) entspannt wird, und anschliessend durch eine nachfolgende zweite Brennkammer (14) strömt, in welcher Brennstoff (29) in das Heissgas (37) eingedüst wird, welche Brennstofflanze (25, 31) zur Eindüsung von Brennstoff (29) in das Heissgas (37) in der zweiten Brennkammer (14) angeordnet ist, wobei die Brennstofflanze (25, 31) einen sich in Strömungsrichtung des Heissgases (37) erstreckenden Lanzenteil aufweist, der wenigstens ein konzentrisch zu einer Lanzenachse (34) angeordnetes Aussenrohr (26) und ein konzentrisch im Aussenrohr (26) angeordnetes Zwischenrohr (27) umfasst, in welchen der Brennstoff (29) zu einer Lanzenspitze (38) geführt und im Bereich der Lanzenspitze (38) durch erste Eindüsungsöffnungen (28) in das Heissgas (37) eingedüst wird, wobei die ersten Eindüsungsöffnungen (28) unmittelbar an der Lanzenspitze (38) angeordnet sind, und die ersten Eindüsungsöffnungen (28) so orientiert sind, dass die aus ihnen heraustretenden Brennstoffstrahlen mit der Lanzenachse (34) einen spitzen Winkel einschliessen und die Lanzenspitze (38) abgerundet ist, und die ersten Eindüsungsöffnungen (28) im Bereich der Rundung angeordnet sind, **dadurch gekennzeichnet, dass** das Zwischenrohr (27) in einem Abstand von der Lanzenspitze (38) endet und am Ende eine Öffnung aufweist, die der Weite des Rohres entspricht.

2. Brennstofflanze nach Anspruche 1, **dadurch gekennzeichnet, dass** in dem Zwischenrohr (27) konzentrisch ein Innenrohr (32) angeordnet ist, dass das Innenrohr (32) zur Lanzenspitze (38) geführt ist, und dass an der Lanzenspitze (38) zweite Eindüsungsöffnungen (33) zur Eindüsung von flüssigem Brennstoff vorgesehen sind, welche durch das Innenrohr (32) mit dem flüssigen Brennstoff versorgt werden.

3. Brennstofflanze nach Anspruch 2, **dadurch gekennzeichnet, dass** die ersten und zweiten Eindüsungsöffnungen (28 bzw. 33) jeweils auf einem gemeinsamen Radius um die Lanzenachse angeordnet sind, und dass der Radius der zweiten Eindüsungsöffnungen (33) kleiner ist als der Radius der ersten Eindüsungsöffnungen (28).

4. Brennstofflanze nach Anspruch 2 oder 3, **dadurch gekennzeichnet, dass** die zweiten Eindüsungsöffnungen (33) zur Erzeugung eines Brennstoffstrahls ausgelegt sind.

5. Brennstofflanze nach Anspruch 2 oder 3, **dadurch gekennzeichnet, dass** die zweiten Eindüsungsöffnungen (33) zur Erzeugung eines Sprühnebels ausgelegt sind.

6. Verfahren zum Betrieb einer Brennstofflanze (25, 31) nach Anspruch 1, **dadurch gekennzeichnet, dass** im Zwischenrohr (27) als Brennstoff Syngas (29) zu den ersten Eindüsungsöffnungen (28) geführt und durch die ersten Eindüsungsöffnungen (28) in den Heissgasstrom (37) eingedüst wird.

7. Verfahren nach Anspruch 6, **dadurch gekennzeichnet, dass** im Zwischenraum zwischen Aussenrohr (26) und Zwischenrohr (27) ebenfalls als Brennstoff Syngas (29) zu den ersten Eindüsungsöffnungen (28) geführt und durch die ersten Eindüsungsöffnungen (28) in den Heissgasstrom (37) eingedüst wird.

8. Verfahren nach Anspruch 6, **dadurch gekennzeichnet, dass** im Zwischenraum zwischen Aussenrohr (26) und dem Zwischenrohr (27) ein Verdünnungsmedium, insbesondere Stickstoff oder Dampf, zu den ersten Eindüsungsöffnungen (28) geführt und durch die ersten Eindüsöffnungen (28) in den Heissgasstrom (37) eingedüst wird.

9. Verfahren nach Anspruch 6, **dadurch gekennzeichnet, dass** im Zwischenraum zwischen Aussenrohr (26) und dem Zwischenrohr (27) Luft als Träger oder Abschirmmedium zu den ersten Eindüsungsöffnungen (28) geführt und durch die ersten Eindüsungsöffnungen (28) in den Heissgasstrom (37) eingedüst wird.

10. Verfahren zum Betrieb einer Brennstofflanze (31) nach Anspruch 2,
**dadurch gekennzeichnet, dass** im Zwischenraum zwischen Zwischenrohr (27) und Innenrohr als Brennstoff Syngas (29) zu den ersten Eindüsungsöffnungen (28) geführt und durch die ersten Eindüsungsöffnungen (28) in den Heissgasstrom (37) eingedüst wird, und dass im Innenrohr (32) ein flüssiger Brennstoff, insbesondere Öl, zu den zweiten Eindüsungsöffnungen (33) geführt und durch die zweiten Eindüsungsöffnungen (33) in den Heissgasstrom (37) eingedüst wird.

11. Verfahren nach Anspruch 10, **dadurch gekennzeichnet, dass** im Zwischenraum zwischen Aussenrohr (26) und Zwischenrohr (27) ebenfalls als Brennstoff Syngas (29) zu den ersten Eindüsungsöffnungen (28) geführt und durch die ersten Eindüsungsöffnungen (28) in den Heissgasstrom (37) eingedüst wird.

12. Verfahren nach Anspruch 10, **dadurch gekennzeichnet, dass** im Zwischenraum zwischen Aussenrohr (26) und dem Zwischenrohr (27) ein Verdünnungsmedium, insbesondere Stickstoff oder Dampf, zu den ersten Eindüsungsöffnungen (28) geführt und durch die ersten Eindüsungsöffnungen (28) in den Heissgasstrom (37) eingedüst wird.

13. Verfahren nach Anspruch 10, **dadurch gekennzeichnet, dass** im Zwischenraum zwischen Aussenrohr (26) und dem Zwischenrohr (27) Luft als Träger oder Abschirmmedium zu den ersten Eindüsungsöffnungen (28) geführt und durch die ersten Eindüsungsöffnungen (28) in den Heissgastrom (37) eingedüst wird.

14. Verfahren zum Betrieb einer Brennstofflanze (31) nach Anspruch 2, **dadurch gekennzeichnet, dass** im Zwischenraum zwischen Zwischenrohr (27) und Innenrohr als Brennstoff ein Mischgas (36) aus Erdgas und Dampf oder Stickstoff zu den ersten Eindüsungsöffnungen (28) geführt und durch die ersten Eindüsungsöffnungen (28) in den Heissgasstrom (37) eingedüst wird, und dass im Innenrohr (32) ein flüssiger Brennstoff, insbesondere Öl, zu den zweiten Eindüsungsöffnungen (33) geführt und durch die zweiten Eindüsungsöffnungen (33) in den Heissgasstrom (37) eingedüst wird.

15. Verfahren nach Anspruch 14, **dadurch gekennzeichnet, dass** im Zwischenraum zwischen Aussenrohr (26) und dem Zwischenrohr (27) Luft als Träger zu den ersten Eindüsungsöffnungen (28) geführt und durch die ersten Eindüsungsöffnungen (28) in den Heissgasstrom (37) eingedüst wird.

## Claims

1. Fuel lance (25, 31) for a gas turbine plant (10) having sequential combustion, in which hot gas (37) is produced in a first combustion chamber (12) and is expanded in a downstream turbine (13) and then flows through a downstream second combustion chamber (14) in which fuel (29) is injected into the hot gas (37), which fuel lance (25, 31) for injecting fuel (29) into the hot gas (37) is arranged in the second combustion chamber (14), wherein the fuel lance (25, 31) has a lance part which extends in the direction of flow of the hot gas (37) and comprises at least one outer tube (26) arranged concentrically to a lance axis (34) and an intermediate tube (27) arranged concentrically in the outer tube (26), in which tubes the fuel (29) is guided to a lance tip (38) and is injected into the hot gas (37) through first injection openings (28) in the region of the lance tip (38), wherein the first injection openings (28) are arranged directly at the lance tip (38) and the first injection openings (28) are oriented such that the fuel jets emerging therefrom together with the lance axis (34) enclose an acute angle and the lance tip (38) is rounded, and the first injection openings (28) are arranged in the region of the rounding, **characterized in that** the intermediate tube (27) ends at a distance from the lance tip (38) and at the end has an opening which corresponds to the width of the tube.

2. Fuel lance according to claim 1, **characterized in that** an inner tube (32) is arranged concentrically in the intermediate tube (27), that the inner tube (32) is guided to the lance tip (38), and that second injection openings (33) for injecting liquid fuel are provided at the lance tip (38) and supplied with the liquid fuel through the inner tube (32).

3. Fuel lance according to claim 2, **characterized in that** the first and second injection openings (28 and 33) are arranged respectively on a common radius about the lance axis, and that the radius of the second injection openings (33) is smaller than the radius of the first injection openings (28).

4. Fuel lance according to claim 2 or 3, **characterized in that** the second injection openings (33) are designed to produce a fuel jet.

5. Fuel lance according to claim 2 or 3, **characterized in that** the second injection openings (3) are designed to produce a spray mist.

6. Method for operating a fuel lance (25, 31) according to claim 1, **characterized in that** syngas (29) as fuel is guided to the first injection openings (28) in the intermediate tube (27), and injected into the hot gas flow (37) through the first injection openings (28).

7. Method according to claim 6, **characterized in that** syngas (29) as fuel is also guided to the first injection openings (28) in the intermediate space between the outer tube (26) and the intermediate tube (27), and injected into the hot gas flow (37) through the first injection openings (28).

8. Method according to claim 6, **characterized in that** a dilutant, in particular nitrogen or steam, is guided to the first injection openings (28) in the intermediate space between the outer tube (26) and the intermediate tube (27), and injected into the hot gas flow (37) through the first injection openings (28).

9. Method according to claim 6, **characterized in that** air as a carrier or shielding medium is guided to the first injection openings (28) in the intermediate space between the outer tube (26) and the intermediate tube (27), and injected into the hot gas flow (37) through the first injection openings (28).

10. Method for operating a fuel lance (31) according to claim 2, **characterized in that** syngas (29) as fuel is guided to the first injection openings (28) in the intermediate space between the intermediate tube (27) and the inner tube, and injected into the hot gas flow (37) through the first injection openings (28), and that a liquid fuel, in particular oil, is guided to the second injection openings (33) in the inner tube (32) and injected into the hot gas flow (37) through the second injection openings (33).

11. Method according to claim 10, **characterized in that** syngas (29) as fuel is also guided to the first injection openings (28) in the intermediate space between the outer tube (26) and the intermediate tube (27), and injected into the hot gas flow (37) through the first injection openings (28).

12. Method according to claim 10, **characterized in that** a dilutant, in particular nitrogen or steam, is guided to the first injection openings (28) in the intermediate space between the outer tube (26) and the intermediate tube (27), and injected into the hot gas flow (37) through the first injection openings (28).

13. Method according to claim 13, **characterized in that** air as a carrier or shielding medium is guided to the first injection openings (28) in the intermediate space between the outer tube (26) and the intermediate tube (27), and injected into the hot gas flow (37) through the first injection openings (28).

14. Method for operating a fuel lance (31) according to claim 2, **characterized in that** a gas mixture (36) of natural gas and steam or nitrogen is guided to the first injection openings (28) in the intermediate space between the intermediate tube (27) and the inner tube, and injected into the hot gas flow (37) through the first injection openings (28), and that a liquid fuel, in particular oil, is guided to the second injection openings (33) in the inner tube (32) and injected into the hot gas flow (37) through the second injection openings (33).

15. Method according to claim 14, **characterized in that** air as a carrier is guided to the first injection openings (28) in the intermediate space between the outer tube (26) and the intermediate tube (27), and injected into the hot gas flow (37) through the first injection openings (28).

## Revendications

1. Lance à carburant (25, 31) pour une installation à turbine à gaz (10) avec une combustion séquentielle, dans laquelle, dans une première chambre de combustion (12), du gaz chaud (37) est produit et détendu dans une turbine (13) suivante, puis s'écoule à travers une deuxième chambre de combustion (14) suivante, dans laquelle du carburant (29) est introduit dans le gaz chaud (37), cette lance à carburant (25, 31) étant disposée pour l'introduction de carburant (29) dans le gaz chaud (37) dans la deuxième chambre de combustion (14), la lance à carburant (25, 31) comprenant, dans une partie de lance s'étendant dans la direction d'écoulement du gaz chaud (37), qui comprend au moins un tube externe (26) disposé de manière concentrique par rapport à un axe de la lance (34) et un tube intermédiaire (27) disposé de manière concentrique dans le tube externe (26), dans lequel le carburant (29) est guidé vers une pointe de lance (38) et est introduit, au niveau de la pointe de lance (38) à travers des premières ouvertures d'introduction (28) dans le gaz chaud (37), les premières ouvertures d'introduction (28) étant disposées directement au niveau de la pointe de lance (38) et les premières ouvertures d'introduction (28) étant orientées de façon à ce que les jets de carburants qui en sortent forment avec l'axe de la lance (34) un angle aigu et la pointe de lance (38) étant arrondie et les premières ouvertures d'introduction (28) étant disposées au niveau de l'arrondi, **caractérisée en ce que** le tube intermédiaire (27) se termine à une certaine distance de la pointe de lance (38) et comprend, à son extrémité, une ouverture correspondant au diamètre du tube.

2. Lance à carburant selon la revendication 1, **caractérisée en ce que**, dans le tube intermédiaire (27), un tube interne (32) est disposé de manière concentrique, **en ce que** le tube interne (32) est guidé vers la pointe de lance (38) et **en ce que**, au niveau de la pointe de lance (38), sont prévues des deuxièmes ouvertures d'introduction (33) pour l'introduction de carburant liquide, qui sont alimentées en carburant liquide par le tube interne (32).

3. Lance à carburant selon la revendication 2, **caractérisée en ce que** les premières et deuxièmes ouvertures d'introduction (28 ou 33) sont disposées chacune sur un rayon commun autour de l'axe de la lance et **en ce que** le rayon des deuxièmes ouvertures d'introduction (33) est inférieur au rayon des premières ouvertures d'introduction (28).

4. Lance à carburant selon la revendication 2 ou 3, **caractérisée en ce que** les deuxièmes ouvertures d'introduction (33) sont conçues pour la production d'un jet de carburant.

5. Lance à carburant selon la revendication 2 ou 3, **caractérisée en ce que** les deuxièmes ouvertures d'introduction (33) sont conçues pour la production d'un brouillard de pulvérisation.

6. Procédé pour l'exploitation d'une lance à carburant (25, 31) selon la revendication 1, **caractérisée en ce que**, dans le tube intermédiaire (27), en tant que carburant, un gaz de synthèse (29) est guidé vers les premières ouvertures d'introduction (28) et est introduit à travers les premières ouvertures d'introduction (28) dans l'écoulement de gaz chaud (37).

7. Procédé selon la revendication 6, **caractérisée en ce que**, dans l'espace intermédiaire entre le tube externe (26) et le tube intermédiaire (27), également en tant que carburant, un gaz de synthèse (29) est guidé vers les premières ouvertures d'introduction (28) et est introduit à travers les premières ouvertures d'introduction (28) dans l'écoulement de gaz chaud (37).

8. Procédé selon la revendication 6, **caractérisée en ce que**, dans l'espace intermédiaire entre le tube externe (26) et le tube intermédiaire (27), un milieu de dilution, plus particulièrement de l'azote ou de la vapeur, est guidé vers les premières ouvertures d'introduction (28) et est introduit à travers les premières ouvertures d'introduction (28) dans l'écoulement de gaz chaud (37).

9. Procédé selon la revendication 6, **caractérisée en ce que**, dans l'espace intermédiaire entre le tube externe (26) et le tube intermédiaire (27), de l'air est guidé, en tant que milieu porteur ou que milieu de protection, vers les premières ouvertures d'introduction (28) et est introduit à travers les premières ouvertures d'introduction (28) dans l'écoulement de gaz chaud (37).

10. Procédé pour l'exploitation d'une lance à carburant (31) selon la revendication 2, **caractérisée en ce que**, dans l'espace intermédiaire entre le tube intermédiaire (27) et le tube interne, en tant que carburant, du gaz de synthèse (29) est guidé vers les premières ouvertures d'introduction (28) et est introduit à travers les premières ouvertures d'introduction (28) dans l'écoulement de gaz chaud (37) et **en ce que**, dans le tube interne (32), un carburant liquide, plus particulièrement du pétrole, est guidé vers les deuxièmes ouvertures d'introduction (33) et est introduit à travers les deuxièmes ouvertures d'introduction (33) dans l'écoulement de gaz chaud (37).

11. Procédé selon la revendication 10, **caractérisée en ce que**, dans l'espace intermédiaire entre le tube externe (26) et le tube intermédiaire (27), également en tant que carburant, un gaz de synthèse (29) est guidé vers les premières ouvertures d'introduction (28) et est introduit à travers les premières ouvertures d'introduction (28) dans l'écoulement de gaz chaud (37).

12. Procédé selon la revendication 10, **caractérisée en ce que**, dans l'espace intermédiaire entre le tube externe (26) et le tube intermédiaire (27), un milieu de dilution, plus particulièrement de l'azote ou de la vapeur, est guidé vers les premières ouvertures d'introduction (28) et est introduit à travers les premières ouvertures d'introduction (28) dans l'écoulement de gaz chaud (37).

13. Procédé selon la revendication 10, **caractérisée en ce que**, dans l'espace intermédiaire entre le tube externe (26) et le tube intermédiaire (27), de l'air est guidé, en tant que milieu porteur ou que milieu de protection, vers les premières ouvertures d'introduction (28) et est introduit à travers les premières ouvertures d'introduction (28) dans l'écoulement de gaz chaud (37).

14. Procédé pour l'exploitation d'une lance à carburant (31) selon la revendication 2, **caractérisée en ce que**, dans l'espace intermédiaire entre le tube intermédiaire (27) et le tube interne, en tant que carburant, un mélange de gaz (36) constitué de gaz naturel et de vapeur ou d'azote est guidée vers les premières ouvertures d'introduction (28) et est introduit à travers les premières ouvertures d'introduction (28) dans l'écoulement de gaz chaud (37) et **en ce que** dans le tube interne (32), un carburant liquide, plus particulièrement du pétrole, est guidé vers les deuxièmes ouvertures d'introduction (33) et est introduit à travers les deuxièmes ouvertures d'introduction (33) dans l'écoulement de gaz chaud (37).

15. Procédé selon la revendication 14, **caractérisée en ce que**, dans l'espace intermédiaire entre le tube externe (26) et le tube intermédiaire (27), de l'air est guidé, en tant que milieu porteur, vers les premières ouvertures d'introduction (28) et est introduit à travers les premières ouvertures d'introduction (28) dans l'écoulement de gaz chaud (37).
